# EUROPEAN PATENT SPECIFICATION

(11) **EP 4 124 078 B1**
(45) Date of publication and mention of the grant of the patent: **22.07.2026**
(21) Application number: 20931596.9
(22) Date of filing: 14.04.2020
(51) Int. Cl.: H04W 74/0833, H04W 48/16, H04W 74/0836, H04W 48/18

(54) **RANDOM ACCESS METHOD AND TERMINAL DEVICE**
DIREKTZUGRIFFSVERFAHREN UND ENDGERÄTEVORRICHTUNG
PROCÉDÉ D'ACCÈS ALÉATOIRE ET DISPOSITIF TERMINAL

(43) Date of publication of application: 25.01.2023
(73) Proprietor: Huawei Technologies Co., Ltd., Shenzhen, Guangdong 518129 (CN)
(72) Inventor: QU, Kaiyang, Shenzhen, Guangdong 518129 (CN); HUANG, Qufang, Shenzhen, Guangdong 518129 (CN); LUO, Haiyan, Shenzhen, Guangdong 518129 (CN); XIAO, Xiao, Shenzhen, Guangdong 518129 (CN)
(74) Representative: Pfenning, Meinig & Partner mbB
(86) International application number: PCT/CN2020/084596
(87) International publication number: WO 2021/207908

(56) References cited:
- WO-A1-2020/056721
- WO-A1-2020/056736
- CN-A- 106 572 516
- CN-A- 106 851 589
- CN-A- 110 461 027
- NOKIA ET AL: "Initial radio resource isolation for slicing", vol. RAN WG2, no. Berlin, Germany; 20170821 - 20170825, 20 August 2017 (2017-08-20), XP051318974, Retrieved from the Internet <URL:http://www.3gpp.org/ftp/Meetings_3GPP_SYNC/RAN2/Docs/> [retrieved on 20170820]
- XIAOMI: "PRACH partitioning, access and congestion control Consideration for Network Slicing", vol. RAN WG2, no. Athens, Greece; 20170213 - 20170217, 12 February 2017 (2017-02-12), XP051211760, Retrieved from the Internet <URL:http://www.3gpp.org/ftp/Meetings_3GPP_SYNC/RAN2/Docs/> [retrieved on 20170212]
- INTERDIGITAL INC: "PRACH Resources for NR", vol. RAN WG2, no. Hangzhou; 20170515 - 20170519, 14 May 2017 (2017-05-14), XP051275424, Retrieved from the Internet <URL:http://www.3gpp.org/ftp/Meetings_3GPP_SYNC/RAN2/Docs/> [retrieved on 20170514]
- CMCC: "Study on enhancement of RAN Slicing", 3GPP DRAFT; RP-192600, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Sitges, Barcelona; 20191209 - 20191212, 2 December 2019 (2019-12-02), Mobile Competence Centre ; 650, route des Lucioles ; F-06921 Sophia-Antipolis Cedex ; France , XP051834250

## Description

### TECHNICAL FIELD

This application relates to the field of communication technologies, and in particular, to a random access method and apparatus, and a computer-readable storage medium.

### BACKGROUND

With development of mobile communication technologies, various new services and application scenarios continuously emerge, and requirements of these services for network functions, connection performance, security, and the like are greatly different. If a single network is used to carry these services, it is difficult to meet requirements on high bandwidth, low latency, high reliability, and the like at the same time. However, separately building a new network for each type of service brings huge costs.

Development of network function virtualization (network function virtualization, NFV) technologies enables an operator to construct different virtual networks for different service requirements. A network slice is an end-to-end virtual network formed by logically defining and dividing a network based on a common physical infrastructure. Each virtual network has a different function feature, to dynamically meet various requirements and business models.

In a conventional technology, when initiating a network slice service, a terminal device usually selects a random access type based on signal strength of a reference signal sent in a measured cell. In this way, when a plurality of terminal devices all obtain equivalent signal strength through measurement, the plurality of terminal devices all select one random access type to initiate random access. Consequently, normal access of the terminal devices is easily affected due to insufficient random access resources, and some network slice services with a high requirement for timeliness are affected.

3GPP DRAFT R2 - 1709202 discloses that multiple slices can be supported by a PRACH configuration within a PRACH partition, and NSSAI (Network Slice Selection Assistance Information) includes one or more S-NSSAIs (Single NSSAI). In addition, each network slice is uniquely identified by a S-NSSAI.

### SUMMARY

The invention is defined by the subject-matter of the independent claims. Particular embodiments of the invention are set out in the dependent claims. Embodiments of this application provide a random access method and a terminal device. A random access type is determined based on a corresponding to-be-initiated network slice service, so that random access is performed for network slice services of different types based on different random access types. To be specific, a random access type with a small amount of interaction signaling may be preferably used for network slice services with a high requirement for timeliness to perform random access; and a random access type with a small amount of interaction signaling is used for network slice services without a high requirement for timeliness to perform random access. In this way, limited two-step random access time-frequency resources are reserved for another terminal device that has a requirement on fast access, thereby improving network experience.

As can be learned from the foregoing technical solutions, this application has the following advantages.

In embodiments of this application, the terminal device determines, based on a to-be-initiated network slice service, a random access type corresponding to the to-be-initiated network slice service. For example, when the to-be-initiated network slice service is a network slice service with a high requirement for timeliness, the terminal device preferably selects a two-step random access type; or when the to-be-initiated network slice service is a network slice service without a high requirement for timeliness, the terminal device selects a four-step random access type, so that random access is performed for network slice services of different types based on different random access types. That is, a random access type with a small amount of interaction signaling may be preferably used for network slice services with a high requirement for timeliness to perform random access, to improve random access rates of these network slice services; and a random access type with a small amount of interaction signaling is used for network slice services without a high requirement for timeliness to perform random access, to save random access resources corresponding to the random access type with a small amount of interaction signaling. In this way, limited two-step random access time-frequency resources are reserved for another terminal device that has a requirement on fast access, thereby improving network experience.

### BRIEF DESCRIPTION OF DRAWINGS

FIG. 1 is a schematic diagram of an application scenario;
FIG. 2 is a schematic flowchart of a random access method 200 according to an embodiment of this application;
FIG. 3 is another schematic flowchart of a random access method 200 according to an embodiment of this application;
FIG. 4 is a schematic flowchart of a random access method 400;
FIG. 5 is a schematic flowchart of a random access method 500 according to an embodiment of this application;
FIG. 6 is a schematic flowchart of a random access method 600 according to an embodiment of this application;
FIG. 7 is a schematic flowchart of a random access method 700 according to an embodiment of this application;
FIG. 8 is a schematic flowchart of a random access method 800;
FIG. 9 is a schematic diagram of actions of triggering a counter;
FIG. 10 is a schematic diagram of a structure of a terminal device 1000 according to an embodiment of this application; and
FIG. 11 is a schematic diagram of a structure of a terminal device 1100; The invention is described by the combination of the embodiments related to figures 2, 3, 5, 6, 7 and 10.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those modules, but may include other modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into units in this application is logical division and may be other division in an actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

When a terminal device initiates a service, the terminal device usually needs to select a random access type, and then initiates random access based on the selected random access type. Generally, the terminal device selects the random access type by measuring signal strength of a reference signal sent by a radio access network (radio access network, RAN) device. For example, when signal strength is strong, the terminal device selects two-step random access with less interaction signaling; or when signal strength is weak, the terminal device selects four-step random access with more interaction signaling. In this way, when a plurality of terminal devices with strong signal strength simultaneously initiate random access, the plurality of terminal devices select a same random access type to initiate random access. For example, the plurality of terminal devices all select a two-step random access type to initiate random access. Because random access resources of a same random access type are limited, when a plurality of terminal devices all select the same random access type to initiate random access, normal access of the terminal devices is easily affected due to insufficient random access resources, and fast initiation of some services with a high requirement for timeliness is affected.

In a wireless network, different types of services may have different requirements for quality of service (quality of service, QoS) of a network. For example, a requirement for QoS of a service A is low delay, a requirement for QoS of a service B is high reliability, and a requirement for QoS of a service C is high bandwidth. If a single network is used to carry the services, it is difficult to meet requirements on low latency, high reliability, and high bandwidth at the same time. However, separately building a new network for each type of service brings huge costs.

Benefiting from development of network function virtualization (network function virtualization, NFV) technologies, an operator may construct different virtual networks for different types of services, to meet different service requirements. A network slice is a virtual network of a plurality of virtual networks created on a shared physical network resource by using the NFV technology. The plurality of virtual networks are separately used to carry different types of services, and the virtual networks are isolated from each other, to implement service isolation. Different configurations are performed on the plurality of virtual networks, so that the plurality of virtual networks may meet requirements of different types of services. For example, a network slice A may be configured to meet a requirement of a service on low latency. In other words, the network slice A may be used to carry the service A with the requirement on low latency, to meet the requirement for QoS of the service A. The service A may also be referred to as a network slice service A.

In view of this, embodiments of this application provide a random access method. A terminal device determines, based on a to-be-initiated network slice service, a random access type corresponding to the to-be-initiated network slice service. For example, when the to-be-initiated network slice service is a network slice service with a high requirement for timeliness, the terminal device preferably selects a two-step random access type; or when the to-be-initiated network slice service is a network slice service without a high requirement for timeliness, the terminal device preferably selects a four-step random access type, so that random access is performed for network slice services of different types based on different random access types. That is, a random access type with a small amount of interaction signaling may be preferably used for a network slice service with a high requirement for timeliness to perform random access.

For ease of understanding, the following explains terms in embodiments of this application.

Random access may include a process that starts when a terminal device sends a random access preamble and ends when a basic signaling connection between the terminal device and a network is established. Generally, random access may include four-step random access and two-step random access.

The four-step random access includes the following four processes.
1. A terminal device sends a random access preamble. Usually, this process is also referred to as a process in which the terminal device sends a MSG1.
2. An access network device sends a random access response message. Usually, this process is also referred to as a process in which the access network device sends a MSG2.
3. The UE sends an RRC connection request message. Usually, this process is also referred to as a process in which the terminal device sends a MSG3.
4. The access network device sends an RRC connection establishment message. Usually, this process is also referred to as a process in which the access network device sends a MSG4.

The two-step random access includes the following two processes.
1. A terminal device sends a random access preamble and an RRC connection request message. Usually, this process is also referred to as a process in which the terminal device sends a MSGA.
2. The access network device sends an RRC connection establishment message. Usually, this process is also referred to as a process in which the access network device sends a MSGB.

A random access resource is a resource that needs to be used by a terminal device in a process of initiating random access. Generally, random access resources include a time domain resource, a frequency domain resource, and a code resource. In a non-contention based random access scenario, an access network device may allocate a dedicated preamble to a terminal device, and the terminal device initiates non-contention based random access based on the dedicated preamble. Specifically, the access network device may send a PDCCH message or an RRC message to the terminal device. The PDCCH message or the RRC message can indicate a preamble index (Preamble Index) used for random access. The PDCCH message or the RRC message can further indicate a physical random access channel mask index (physical random access channel mask index, PRACH Mask Index), namely, a time-frequency resource. The preamble index indicates a preamble used by the terminal device to perform random access, and the PRACH Mask Index indicates a number of a subframe that in a system frame and that corresponds to a PRACH on which the terminal device may send the preamble. In a contention-based random access scenario, an access network device may broadcast, based on a cell broadcast message, information about a preamble resource pool that may be used by the terminal device, and the terminal device may select a preamble from the preamble resource pool and send the preamble to the access network device. In this case, a plurality of terminal devices may simultaneously select and send a same preamble on a same time-frequency resource to the access network device. In other words, a contention conflict of the plurality of terminal devices may occur.

The technical solutions in embodiments of this application may be applied to a scenario in which the terminal device initiates contention-based random access, or may be applied to a scenario in which the terminal device initiates non-contention based random access. This is not specifically limited herein.

Single network slice selection assistance information (single network slice selection assistance information, S-NSSAI) is an identifier of a network slice, and can represent a network slice in a network. Generally, each network slice in a network has a unique S-NSSAI.

A radio access network slicing area identity (ran slicing area Identity, RSA ID) is a network slice identifier of a RAN area, and indicates one or more network slices. Generally, one RSA ID may correspond to one or more pieces of S-NSSAI, and a correspondence between the RSA ID and the S-NSSAI is valid within a range of a tracking area (tracking area, TA). The TA is a geographical area continuously covered by a cell, and is used for paging and implementing location update of a terminal device. One RSA ID may correspond to a plurality of pieces of S-NSSAI, and a quantity of bits of the RSA ID is less than that of the S-NSSAI. Therefore, compared with broadcasting the plurality of pieces of S-NSSAI, directly broadcasting the RSA ID by the base station may reduce resource overheads.

The technical solutions in embodiments of this application may be applied to various communication systems, for example, a code division multiple access (code division multiple access, CDMA) system, a time division multiple access (time division multiple access, TDMA) system, a frequency division multiple access (frequency division multiple access, FDMA) system, an orthogonal frequency division multiple access (orthogonal frequency-division multiple access, OFDMA) system, and a single carrier FDMA (single carrier FDMA, SC-FDMA) system. Terms "system" and "network" can be interchanged with each other. For example, the technical solutions in embodiments of this application may be applied to a 3GPP long term evolution (long term evolution, LTE) system, various versions evolved based on LTE, or a communication system such as a 5th generation (5th Generation, 5G) communication system or a new radio (new radio, NR) system. In addition, the communication systems may be further used in future-oriented communication technologies, and are all used in the technical solutions provided in embodiments of this application. The system architecture and the service scenario described in embodiments of this application are intended to describe the technical solutions in embodiments of this application more clearly, and do not constitute a limitation on the technical solutions provided in embodiments of this application. A person of ordinary skill in the art may learn that: With the evolution of the network architecture and the emergence of new service scenarios, the technical solutions provided in embodiments of this application are also applicable to a similar technical problem.

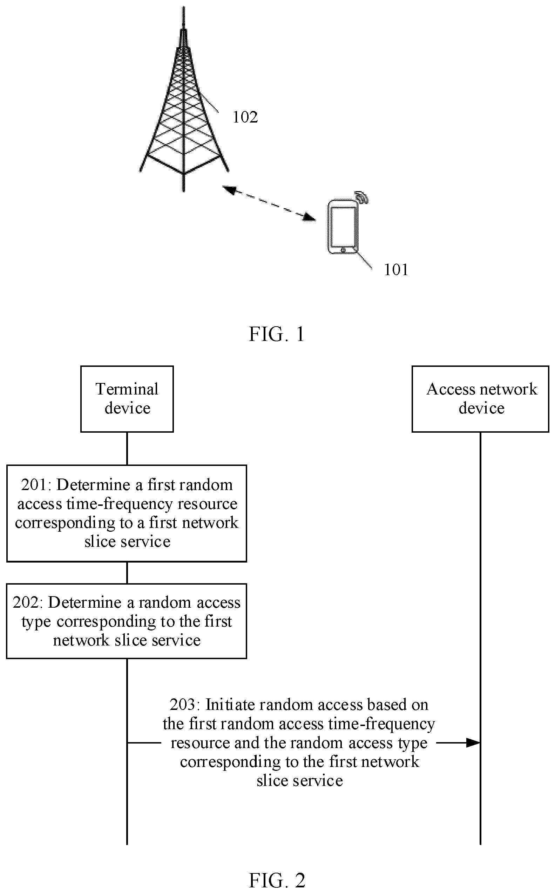

For ease of understanding, the following briefly describes an application scenario of embodiments of this application with reference to FIG. 1. As shown in FIG. 1, the application scenario includes a terminal device 101 and an access network device 102. The terminal device 101 is wirelessly connected to the access network device 102, and the access network device 102 is configured to connect the terminal device 101 to a wireless network.

The terminal device 101 is also referred to as user equipment (user equipment, UE), a mobile station (mobile station, MS), a mobile terminal (mobile terminal, MT), or the like. The terminal device is a device that provides voice and/or data connectivity for a user, or a chip disposed in the device. For example, the terminal device is a handheld device or a vehicle-mounted device that has a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), or a wireless terminal in a smart home (smart home).

The access network device 102 may be any device having a wireless transceiver function, or a chip disposed in the device having a specific wireless transceiver function. The access network device 102 includes but is not limited to a base station (for example, a base station BS, a base station NodeB, an evolved base station eNodeB or eNB, a base station gNodeB or gNB in a fifth generation 5G communication system, a base station in a future communication system, an access node in a Wi-Fi system, a wireless relay node, or a wireless backhaul node), and the like. The base station may be a macro base station, a micro base station, a picocell base station, a small cell, a relay station, or the like. A plurality of base stations may support a network using the foregoing one or more technologies, or a future evolved network. The base station may include one or more co-site or non-co-site transmission reception points (transmission reception points, TRPs). Alternatively, the access network device 102 may be a radio controller, a central unit (central unit, CU), a distributed unit (distributed unit, DU), or the like in a cloud radio access network (cloud radio access network, C-RAN) scenario. The following uses an example in which the access network device 102 is a base station for description. A plurality of access network devices 102 may be base stations of a same type, or may be base stations of different types. The base station may communicate with the terminal device 101, or may communicate with the terminal device 101 via a relay station. The terminal device 101 may support communication with a plurality of base stations using different technologies. For example, the terminal device 101 may support communication with a base station supporting an LTE network, or may support communication with a base station supporting a 5G network, or may support dual connectivity to a base station using the LTE network and a base station using the 5G network. For example, the terminal device 101 accesses a RAN node of a wireless network. Currently, some examples of RAN nodes are: a gNB, a TRP, an evolved NodeB (evolved NodeB, eNB), a next-generation evolved NodeB (next generation evolved NodeB, ng-eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a Wi-Fi access point (access point, AP), and the like.

FIG. 2 is a schematic flowchart of a random access method 200 according to an embodiment of this application. The random access method 200 includes the following steps.

201: A terminal device determines a first random access time-frequency resource corresponding to a first network slice service, where the first network slice service is a to-be-initiated network slice service.

In a possible embodiment, after determining the to-be-initiated first network slice service, the terminal device may determine, based on the first network slice service and a first mapping relationship, the first random access time-frequency resource corresponding to the first network slice service, where the first mapping relationship is a mapping relationship between a network slice service and a random access time-frequency resource that is used to access the network slice service.

The terminal device may obtain the first mapping relationship in a plurality of manners.

In a possible implementation, an access network device broadcasts a system message, where the system message carries the first mapping relationship. The terminal device may obtain the first mapping relationship by receiving the system message broadcast by the access network device. For example, the first mapping relationship carried in the system message may be shown in Table 1. Table 1 describes a possible structure of the first mapping relationship.

**Table 1**

| SIB1 message | Indicates system message 1. |
|---|---|
| >Slice matching information item | Indicates a correspondence between a random access time-frequency resource and a network slice service, and a specific name is not limited. |
| >>Random access time-frequency resource identifier | Indicates an identifier of a random access time-frequency resource. |
| >>Network slice service identifier | Indicates an identifier of a network slice service. |

One network slice service identifier may correspond to one or more random access time-frequency resource identifiers. In other words, one or more random access time-frequency resources corresponding to the first network slice service may be determined based on an identifier of the first network slice service. Specifically, the one or more random access time-frequency resources corresponding to the first network slice service may be one or more random access time-frequency resources in a cell that the terminal device accesses. Generally, one random access time-frequency resource may be specifically one or more resource blocks (resource blocks, RBs).

In another possible implementation, the first mapping relationship may be indicated by a PRACH Mask Index. Generally, the PRACH Mask Index indicates a random access time-frequency resource related to a synchronization signal and PBCH block (synchronization signal and PBCH block, SSB). PRACH Mask Indexes with different values may represent random access time-frequency resources corresponding to SSBs in different cases. A synchronization signal (synchronization signal, SS) and a PBCH may be used in a synchronization and access process of the terminal device. The SSB includes the SS and the PBCH. On a basis that the PRACH Mask Index indicates the random access time-frequency resource corresponding to the SSB, a PRACH Mask Index with another value may indicate the first mapping relationship, in other words, the PRACH Mask Index with another value indicates a correspondence between a network slice service and a random access resource. For example, a possible manner in which the PRACH Mask Index indicates the first mapping relationship may be shown in Table 2.

**Table 2**

| Physical random access channel mask index | Random access time-frequency resource |
|---|---|
| 0 | All random access time-frequency resources |
| 1 | Random access time-frequency resource index 1 |
| 2 | Random access time-frequency resource index 2 |
| 3 | Random access time-frequency resource index 3 |
| 4 | Random access time-frequency resource index 4 |
| 5 | Random access time-frequency resource index 5 |
| 6 | Random access time-frequency resource index 6 |
| 7 | Random access time-frequency resource index 7 |
| 8 | Random access time-frequency resource index 8 |
| 9 | Random access time-frequency resource of each even number index |
| 10 | Random access time-frequency resource of each odd number index |
| 11 | Random access time-frequency resource Y1 corresponding to a network slice service X1 |
| 12 | Random access time-frequency resource Y2 corresponding to a network slice service X2 |
| 13 | Reserved |
| 14 | Reserved |
| 15 | Reserved |

When a value of the PRACH Mask Index ranges from 0 to 10, the PRACH Mask Index indicates a random access time-frequency resource selected by the terminal device for initiating random access. The random access time-frequency resource indexes 1 to 8 indicate identifiers of random access time-frequency resources and indicate specific random access time-frequency resources. When a value of the PRACH Mask Index is 11 or 12, the PRACH Mask Index indicates a correspondence between a network slice service and one or more random access resources, where both the random access time-frequency resource Y1 and the random access time-frequency resource Y2 in Table 2 may include one or more random access time-frequency resources. When a value of the PRACH Mask Index ranges from 13 to 15, the PRACH Mask Index is reserved to indicate a random access time-frequency resource in another case. It should be noted that when a value of the PRACH Mask Index ranges from 10 to 15, the value of the PRACH Mask Index may indicate a mapping relationship between a network slice service and a random access time-frequency resource. In actual application, PRACH Mask Index values that indicate the mapping relationship between a network slice service and a random access time-frequency resource may be determined based on an actual requirement. For example, when random access time-frequency resources corresponding to two network slice services need to be indicated, mapping relationships between a network slice service and a random access time-frequency resource may be indicated by using PRACH Mask Indexes of values 11 and 12. When random access time-frequency resources corresponding to five network slice services need to be indicated, mapping relationships between a network slice service and a random access time-frequency resource may be indicated by using PRACH Mask Indexes of values 11 to 15.

Optionally, the PRACH Mask Index may be carried in an RRC message, a PDCCH message, or a system message. In other words, the terminal device may obtain the PRACH Mask Index by receiving the RRC message, the PDCCH message, or the system message sent by the access network device, and determine the first mapping relationship based on an indication in the PRACH Mask Index.

In another possible implementation, the first mapping relationship may be carried in an RRC message or a PDCCH message. In other words, the terminal device may obtain the first mapping relationship by receiving the RRC message or the PDCCH message sent by the access network device.

202: The terminal device determines a random access type corresponding to the first network slice service.

In a possible embodiment, the terminal device may determine the random access type corresponding to the first network slice service based on a second mapping relationship between a network slice service and a random access type. The second mapping relationship between a network slice service and a random access type may be carried in a system message, an RRC message or a PDCCH message. The terminal device obtains the second mapping relationship between a network slice service and a random access type by receiving the system message, the RRC message or the PDCCH message sent by the access network device. For example, the terminal device determines, based on the second mapping relationship between a network slice service and a random access type, that a random access type corresponding to a network slice service 1 is two-step random access and a random access type corresponding to a network slice service 2 is four-step random access.

The terminal device may determine the second mapping relationship between a network slice service and a random access type based on a type of the network slice service. Specifically, the access network device may determine that network slice services with a high requirement for timeliness or with high access priority correspond to two-step random access with a small amount of interaction signaling, to increase random access rates of these network slice services. The access network device may further determine that network slice services without a high requirement for timeliness or without high access priority correspond to four-step random access with a large amount of interaction signaling, to reduce overheads of two-step random access resources.

In addition, the terminal device determines based on the type of the network slice service, the random access type corresponding to the network slice service. For example, when the first network slice service is a network slice service with a high requirement for timeliness, the terminal device may determine that the random access type corresponding to the first network slice service is two-step random access with a small amount of interaction signaling. Alternatively, the terminal device may determine the random access type corresponding to the network slice service in another manner. This is not specifically limited herein.

203: The terminal device initiates random access based on the first random access time-frequency resource and the random access type.

In this embodiment, the first random access time-frequency resource may include a random access time-frequency resource of only one random access type. For example, when the random access type corresponding to the first network slice service is two-step random access, the first random access time-frequency resource includes only a time-frequency resource of two-step random access. Alternatively, the first random access time-frequency resource may include random access time-frequency resources of a plurality of random access types. For example, when the random access type corresponding to the first network slice service is two-step random access, the first random access time-frequency resource may include time-frequency resources that are of two-step random access and four-step random access.

In a possible implementation, when the first random access time-frequency resource includes the random access time-frequency resource of only one random access type, the terminal device may directly initiate random access based on the first random access time-frequency resource. For example, when the first random access time-frequency resource includes only one random access time-frequency resource of a random access type, the terminal device may directly initiate random access based on the random access time-frequency resource. When the first random access time-frequency resource includes a plurality of random access time-frequency resources of a same random access type, the terminal device selects one random access time-frequency resource from the plurality of random access time-frequency resources, to initiate random access.

In another possible implementation, when the first random access time-frequency resource includes random access time-frequency resources of a plurality of random access types, the terminal device may determine a second random access time-frequency resource from the first random access time-frequency resource based on the random access type, where the second random access time-frequency resource is a random access time-frequency resource corresponding to the random access type. In this embodiment, the first random access time-frequency resource determined by the terminal device includes a plurality of random access time-frequency resources, where the plurality of random access time-frequency resources includes a time-frequency resource corresponding to two-step random access and a time-frequency resource corresponding to four-step random access. Because the terminal device has determined the random access type, the terminal device may determine, from the first random access time-frequency resource, the random access time-frequency resource (namely, the second random access time-frequency resource) corresponding to the random access type as a candidate random access time-frequency resource, to initiate random access.

For example, the first random access time-frequency resource includes a random access time-frequency resource 1, a random access time-frequency resource 2, a random access time-frequency resource 3, and a random access time-frequency resource 4. The random access time-frequency resource 1 and the random access time-frequency resource 2 are time-frequency resources corresponding to the two-step random access, and the random access time-frequency resource 3 and the random access time-frequency resource 4 are time-frequency resources corresponding to the four-step random access. When the terminal device determines that the random access type is the two-step random access, the terminal device may further determine that the random access time-frequency resource 1 and the random access time-frequency resource 2 are candidate time-frequency resources that can be used for initiating random access.

In this embodiment, when the second random access time-frequency resource further determined by the terminal device includes only one random access time-frequency resource, the terminal device may initiate random access by using the second random access time-frequency resource. When the second random access time-frequency resource includes a plurality of random access time-frequency resources, the terminal device may randomly select one random access time-frequency resource from the second random access time-frequency resource, and then initiate random access based on the selected random access time-frequency resource, to establish a connection to the access network device.

In embodiments of this application, the terminal device determines, based on a to-be-initiated network slice service, a random access type corresponding to the to-be-initiated network slice service. For example, when the to-be-initiated network slice service is a network slice service with a high requirement for timeliness, the terminal device preferably selects a two-step random access type; or when the to-be-initiated network slice service is a network slice service without a high requirement for timeliness, the terminal device preferably selects a four-step random access type, so that random access may be performed for network slice services of different types based on different random access types. That is, a random access type with a small amount of interaction signaling may be preferably used for a network slice service with a high requirement for timeliness to perform random access.

In a possible embodiment, in the step 202, specifically, the terminal device may further determine the random access type corresponding to the first network slice service based on the second mapping relationship between a network slice service and a random access type and signal quality obtained through measurement. The signal quality obtained through measurement is signal quality obtained by the terminal device by measuring a reference signal sent by the access network device. The signal quality may be represented by reference signal received power (reference signal received power, RSRP) or reference signal received quality (reference signal received quality, RSRQ). For example, the reference signal sent by the access network device may include a demodulation reference signal (demodulation reference signal, DMRS), a phase-tracking reference signal (phase-tracking reference signal, PTRS), or a channel state information reference signal (channel state information reference signal, CSI-RS). The terminal device determines the signal quality by measuring the RSRP or the RSRQ of the reference signal.

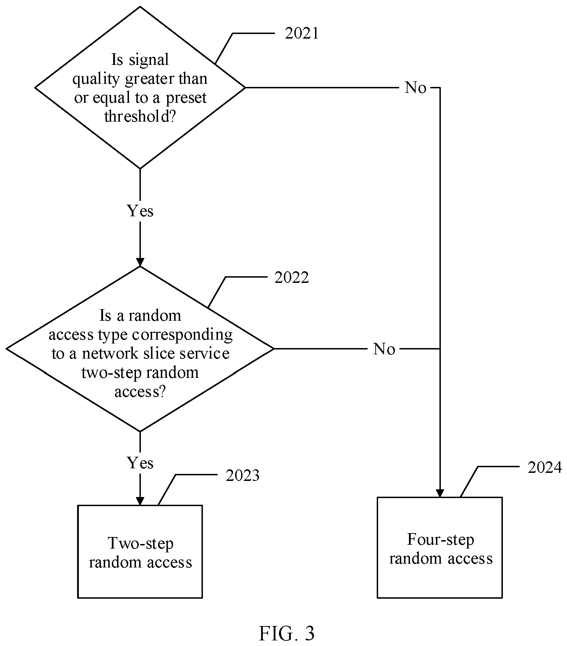

For details, refer to FIG. 3. FIG. 3 is another schematic flowchart of a random access method 200 according to an embodiment of this application. As shown in FIG. 3, step 202 specifically includes the following steps.

2021: The terminal device determines whether the signal quality, of the reference signal, obtained through measurement is greater than or equal to a preset threshold.

Specifically, the terminal device may obtain the signal quality by measuring the reference signal sent by the access network device, and compare the signal quality with the preset threshold. Specifically, the preset threshold may be determined and notified to the terminal device by the access network device, may be defined in a standard protocol, or may be determined by the terminal device. This is not specifically limited herein.

If the signal quality obtained by the terminal device through measurement is greater than or equal to the preset threshold, the terminal device performs step 2022; otherwise, the terminal device performs step 2024.

2022: If the signal quality obtained through measurement is greater than or equal to the preset threshold, the terminal device determines whether the random access type corresponding to the identifier of the first network slice service is the two-step random access.

The terminal device may determine, based on the second mapping relationship between a network slice service and a random access type, whether the random access type corresponding to the first network slice service is the two-step random access. The second mapping relationship may be carried in the system message, the RRC message or the PDCCH message. The terminal device obtains the second mapping relationship between a network slice service and a random access type by receiving the system message, the RRC message or the PDCCH message sent by the access network device. In addition, when the terminal device determines the random access type corresponding to the network slice service, the terminal device may determine, based on the type of the network slice service, whether the random access type corresponding to the first network slice service is the two-step random access.

Because the two-step random access has a specific requirement for the signal quality of the terminal device, when the signal quality obtained by the terminal device through measurement is greater than or equal to the preset threshold, the two-step random access initiated by the terminal device is more likely to succeed. Therefore, when determining that the signal quality obtained through measurement is greater than or equal to the preset threshold, the terminal device may further determine whether the first network slice service corresponds to the two-step random access.

If the terminal device determines that the random access type corresponding to the first network slice service is the two-step random access, the terminal device performs step 2023; otherwise, the terminal device performs step 2024.

2023: The terminal device determines that the two-step random access is a type of to-be-initiated random access corresponding to the first network slice service.

Specifically, when the signal quality is greater than or equal to the preset threshold, and the random access type corresponding to the first network slice service is the two-step random access, the terminal device may determine the two-step random access as a random access type used for initiating the first network slice service.

It may be understood that, if the terminal device determines that the two-step random access is a type of a to-be-initiated random access corresponding to the first network slice service, in the foregoing step 203, the terminal device specifically initiates the two-step random access based on a first random access time-frequency resource.

2024: The terminal device determines that the four-step random access is a type of to-be-initiated random access corresponding to the first network slice service.

Specifically, when the signal quality is less than the preset threshold, or the random access type corresponding to the first network slice service is the four-step random access, the terminal device may determine the four-step random access as a random access type used for initiating the first network slice service.

It may be understood that, if the terminal device determines that the four-step random access is a type of to-be-initiated random access corresponding to the first network slice service, in the foregoing step 203, the terminal device specifically initiates the four-step random access based on a first random access time-frequency resource.

It may be understood that, when the signal quality obtained by the terminal device through measurement is less than the preset threshold, because the first network slice service does not meet the condition for initiating the two-step random access, regardless of whether the random access type corresponding to the first network slice service is the two-step random access, the terminal device initiates the four-step random access. In addition, when the signal quality obtained by the terminal device through measurement is greater than or equal to the preset threshold, but the random access type corresponding to the first network slice service is the four-step random access, the terminal device also initiates the four-step random access. In this way, the time-frequency resources of two-step random access are saved, and the limited time-frequency resources of two-step random access are reserved for another terminal device that has a requirement on fast access, thereby improving network experience.

In this embodiment of this application, the terminal device determines, based on the signal quality obtained through measurement and the to-be-initiated network slice service, the random access type corresponding to the to-be-initiated network slice service. When the signal quality is greater than or equal to the preset threshold, and the random access type corresponding to the network slice service is the two-step random access, the two-step random access is preferably initiated; otherwise, the four-step random access is preferably initiated. In this way, the random access type that is used for initiating the network slice service is further determined based on the signal quality of the terminal device and the random access type corresponding to the network slice service, so that congestion may be effectively avoided. That is, a terminal device with good signal quality may preferably use a random access type with a small amount of interaction signaling to initiate a network slice service with a high requirement for timeliness. In this way, limited two-step random access time-frequency resources are reserved for another terminal device that has a requirement on fast access, thereby improving network experience.

The foregoing describes the random access method from a perspective of the terminal device. The following describes the random access method in detail from a perspective of communication protocol layers in the terminal device.

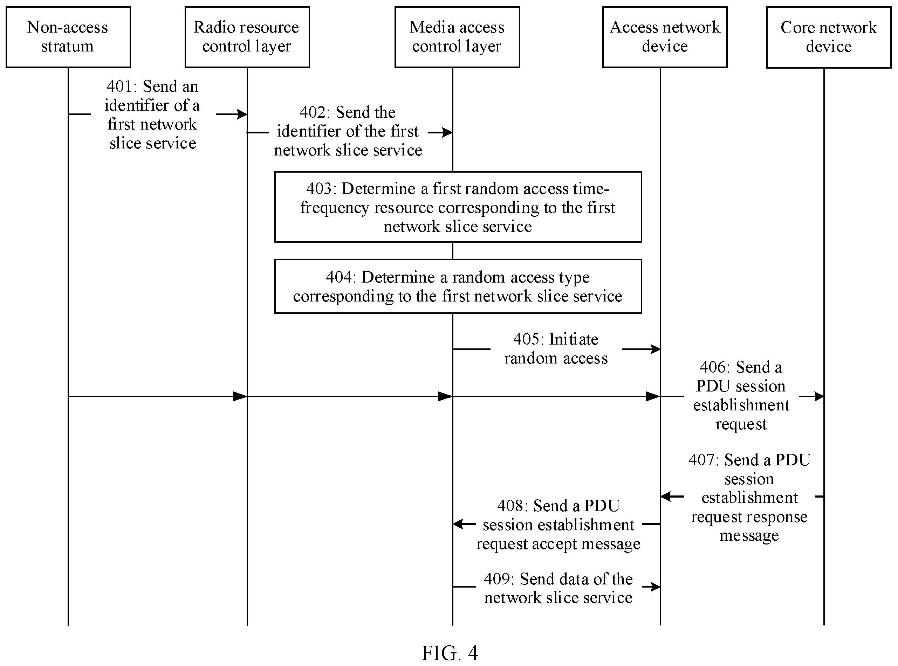

FIG. 4 is another schematic flowchart of a random access method 400 according to an embodiment of this application. The random access method 400 includes the following steps.

401: A non-access stratum (non-access stratum, NAS) of a terminal device sends an identifier of a first network slice service to an RRC layer, to indicate the RRC layer that the first network slice service is to be initiated.

When the NAS of the terminal device needs to initiate the first network slice service, the NAS may transfer the identifier of the first network slice service to the RRC layer of the terminal device, to indicate that the first network slice service is to be initiated in a current cell.

In a possible implementation, the NAS may determine the identifier of the first network slice service based on a to-be-initiated protocol data unit (protocol data unit, PDU) session. One PDU session may correspond to one or more network slice services. In other words, the terminal device may select one network slice service from the one or more network slice services corresponding to the PDU session and initiate the network slice service. Generally, a network slice remapping (slice remapping) list indicates a correspondence between a PDU session and one or more network slice services. Specifically, a structure of a message indicating the network slice remapping list may be shown in Table 3.

**Table 3**

| Slice matching information | Indicates a correspondence between a PDU session and a network slice, and a specific name is not limited. |
|---|---|
| >Slice matching information item | |
| >>PDU session identifier | |
| >>Network slice identifier | |

Specifically, the network slice remapping list may be carried in an RRC message sent by an access network device to the terminal device, to enable the terminal device to obtain the network slice remapping list. Alternatively, the network slice remapping list may be carried in an RRC message sent by the terminal device to an access network device, to enable the access network device to obtain the network slice remapping list.

402: The RRC layer sends the identifier of the first network slice service to a MAC layer, to indicate the MAC layer to determine a corresponding random access time-frequency resource based on the identifier of the first network slice service. 403: The MAC layer determines a first random access time-frequency resource corresponding to the first network slice service.

Step 403 is similar to step 201. For details, refer to step 201. Details are not described herein again.

In a possible embodiment, if the terminal device receives a broadcast message of the current cell and learns that the current cell does not support the to-be-initiated first network slice service, the terminal device may reselect, from the network slice remapping list based on a to-be-initiated PDU session, a network slice service supported by the current cell as the to-be-initiated first network slice service, to ensure normal initiation of a network slice service.

It should be noted that an operation of selecting a new network slice service from the network slice remapping list by the terminal device may be performed at the NAS, or may be performed at the RRC layer or the MAC layer. This is not specifically limited in this embodiment.

404: The MAC layer determines a random access type corresponding to the first network slice service.

Step 404 is similar to step 202. For details, refer to step 202. Details are not described herein again.

405: The MAC layer initiates random access.

Step 405 is similar to step 203. For details, refer to step 203. Details are not described herein again.

406: The terminal device sends a PDU session establishment request.

Specifically, the NAS stratum of the terminal device may send the PDU session establishment request to a core network device through an AS stratum and the access network device. The PDU session establishment request passes through the AS stratum of the terminal device and the access network device, and arrives at the core network device. After the access network device receives the PDU session establishment request, the access network device sends the PDU session establishment request to the core network device. The PDU session establishment request may include but is not limited to information such as a PDU session identifier and the identifier of the first network slice service.

407: The core network device sends a PDU session establishment request response message to the access network device.

After the core network device processes the PDU session establishment request, the core network device may send the PDU session establishment request response message to the access network device, to indicate that the core network device has accepted the PDU session establishment request sent by the terminal device.

408: The access network device sends a PDU session establishment request accept message to the terminal device.

The PDU session establishment request accept message may carry a network slice service identifier, to indicate a network slice service that may be initiated by the terminal device.

Optionally, the network slice service identifier carried in the PDU session establishment request accept message may be the identifier of the first network slice service, which indicates that the terminal device may initiate the first network slice service. Alternatively, the network slice service identifier carried in the PDU session establishment request accept message may be an identifier of another network slice service, which indicates that the terminal device may initiate the another network slice service.

In a possible implementation, the access network device may alternatively send a PDCCH message to the terminal device, and the network slice service identifier is carried in downlink control information (downlink control information, DCI) of the PDCCH message.

409: The terminal device sends data of the network slice service to the access network device.

After receiving the PDU session establishment request accept message, the terminal device may consider that the PDU session has been established. The terminal device may send the data of the network slice service to the access network device. Further, the data of the network slice service may carry the identifier of the first network slice service.

The foregoing describes the random access method from a perspective of a sublayer in the terminal device. The following describes in detail how the sublayer in the terminal device determines a first random access time-frequency resource corresponding to a first network slice service.

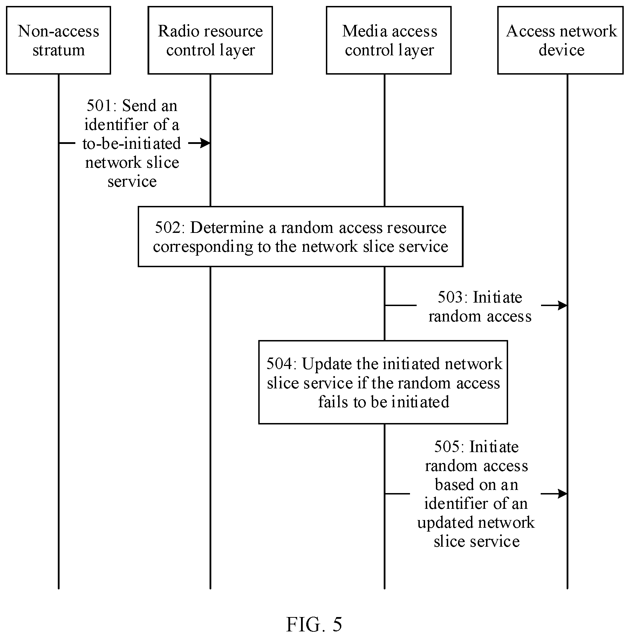

FIG. 5 is a schematic flowchart of a random access method 500 according to an embodiment of this application. The random access method 500 includes the following steps.

501: ANAS of a terminal device sends an identifier of a to-be-initiated network slice service to an RRC layer.

In a possible implementation, the identifier of the network slice service may be specifically S-NSSAI, and one piece of S-NSSAI may be used to represent one network slice service. That is, when one or more to-be-initiated network slice services exist, the NAS may send one or more pieces of S-NSSAI to the RRC layer.

The NAS sends an RSA ID to the RRC layer. There is a one-to-one or one-to-many mapping relationship between an RSA ID and S-NSSAI. To be specific, one RSA ID corresponds to one or more pieces of S-NSSAI, and the one or more pieces of S-NSSAI corresponding to the RSA ID may be determined based on the RSA ID. It should be noted that the mapping relationship between an RSA ID and S-NSSAI may be sent by an access network device to the terminal device in advance based on a system message or an RRC message, to enable the terminal device to obtain the mapping relationship between an RSA ID and S-NSSAI.

502: An access stratum (access stratum, AS) of the terminal device determines a random access resource corresponding to the network slice service. The AS includes an RRC layer, a radio link control (radio link control, RLC) layer, a MAC layer, a physical (physical, PHY) layer, a packet data convergence layer protocol (packet data convergence protocol, PDCP) layer, and a service data adaptation protocol (service data adaptation protocol, SDAP) layer.

Specifically, after the AS obtains the identifier that is of the to-be-initiated network slice service and that is sent by the NAS, the AS determines the network slice service that needs to be initiated, and then determines the random access resource corresponding to the network slice service. When the identifier that is of the network slice service and that is obtained by the AS is S-NSSAI, manners in which the AS determines the random access resource corresponding to the network slice service include but are not limited to the following five manners.
1. The RRC layer of the AS determines a corresponding random access time-frequency resource based on the S-NSSAI, and the RRC layer sends a PRACH Mask Index corresponding to the determined random access time-frequency resource to the MAC layer, to enable the MAC layer to learn of the determined random access time-frequency resource. In other words, a process of determining a random access time-frequency resource may be performed by the RRC layer, and the MAC layer only learns of the random access time-frequency resource that is finally determined, and does not need to learn of the specific S-NSSAI. Specifically, the RRC layer may determine the corresponding random access time-frequency resource based on the S-NSSAI and a mapping relationship between the S-NSSAI and the random access time-frequency resource. For details, refer to the foregoing descriptions. Details are not described herein again.
2. The RRC layer of the AS sends the S-NSSAI to the MAC layer, and the MAC layer determines a corresponding random access time-frequency resource based on the S-NSSAI. In other words, a process of determining a random access time-frequency resource is performed by the MAC layer.
3. The RRC layer of the AS determines a corresponding RSA ID based on the S-NSSAI, then determines a corresponding random access time-frequency resource based on the RSA ID, and finally sends a PRACH Mask Index corresponding to the random access time-frequency resource to the MAC layer, to enable the MAC layer to learn of the determined random access time-frequency resource. A mapping relationship between an RSA ID and a random access time-frequency resource may be delivered by the access network device to the terminal device in advance based on a system message or an RRC message.
4. The RRC layer of the AS sends the S-NSSAI to the MAC layer. The MAC layer determines a corresponding RSA ID based on the S-NSSAI, and then determines a corresponding random access time-frequency resource based on the RSA ID.
5. The RRC layer of the AS determines a corresponding RSA ID based on the S-NSSAI, and then sends the RSA ID to the MAC layer. The MAC layer determines a corresponding random access time-frequency resource based on the RSA ID.

Alternatively, when the NAS sends the RSA ID to the AS, manners in which the AS determines the random access resource corresponding to the network slice service include but are not limited to the following four manners.
a. The RRC layer of the AS determines corresponding S-NSSAI based on the RSA ID, then determines a corresponding random access time-frequency resource based on the S-NSSAI, and finally sends a PRACH Mask Index corresponding to the random access time-frequency resource to the MAC layer.
b. The RRC layer of the AS determines corresponding S-NSSAI based on the RSA ID, and then sends the S-NSSAI to the MAC layer. The MAC layer determines a corresponding random access time-frequency resource based on the S-NSSAI.
c. The RRC layer of the AS determines a corresponding random access time-frequency resource based on the RSA ID, and sends a PRACH Mask Index corresponding to the random access time-frequency resource to the MAC layer.
d. The RRC layer of the AS sends the RSA ID to the MAC layer, and the MAC layer determines a corresponding random access time-frequency resource based on the RSA ID.

503: The MAC layer of the terminal device initiates random access.

Specifically, the MAC layer may initiate random access to the access network device based on the determined random access time-frequency resource. For a specific initiation process, refer to the foregoing descriptions. Details are not described herein again.

504: If the random access initiated by the terminal device fails, the MAC layer of the terminal device updates the initiated network slice service.

It may be understood that when a base station does not have sufficient uplink resources to allocate to the terminal device, the random access initiated by the terminal device may fail. The terminal device may determine, in a plurality of manners, whether the random access initiated by the terminal device fails. For example, when the terminal device initiates four-step random access, if the terminal device receives a MSG4 sent by the access network device, but the MSG4 does not have an identity of the terminal device, the terminal device may determine that the initiated random access fails. Alternatively, after the terminal device sends a MSG3 to the access network device, if the terminal device does not receive a MSG4 replied by the access network device, the terminal device may also determine that the initiated random access fails.

After the terminal device determines that the initiated random access fails, the MAC layer may reinitiate a new network slice service, in other words, updates the initiated network slice service. Manners in which the MAC layer updates the initiated network slice service include but are not limited to the following plurality of manners.

A. The MAC layer removes, from identifiers that are of a plurality of network slice services and that are sent by the NAS stratum, an identifier of a network slice service that has attempted to be initiated but fails, and then reselects a new network slice service from remaining network slice services for initiation. Specifically, a manner in which the MAC layer reselects the network slice service from the remaining network slice services may be as follows: The MAC layer performs selection based on a network slice remapping list, or the MAC layer performs selection based on an indication in a system message delivered by the access network device.

B. The MAC layer sends, to the RRC layer, a request for reselecting a network slice service, to enable the RRC layer to reselect a new network slice service. After the RRC layer selects the new network slice service, the MAC layer may receive an identifier that is of the network slice service and that is sent by the RRC layer. The identifier of the network slice service is an identifier of the reselected network slice service.

505: The MAC layer of the terminal device initiates random access based on the identifier of the updated network slice service.

The foregoing describes a process in which the terminal device initiates random access based on the determined network slice service. The following describes in detail a process for how the terminal device determines a first initiated network slice service when the terminal device has a plurality of to-be-initiated network slice services.

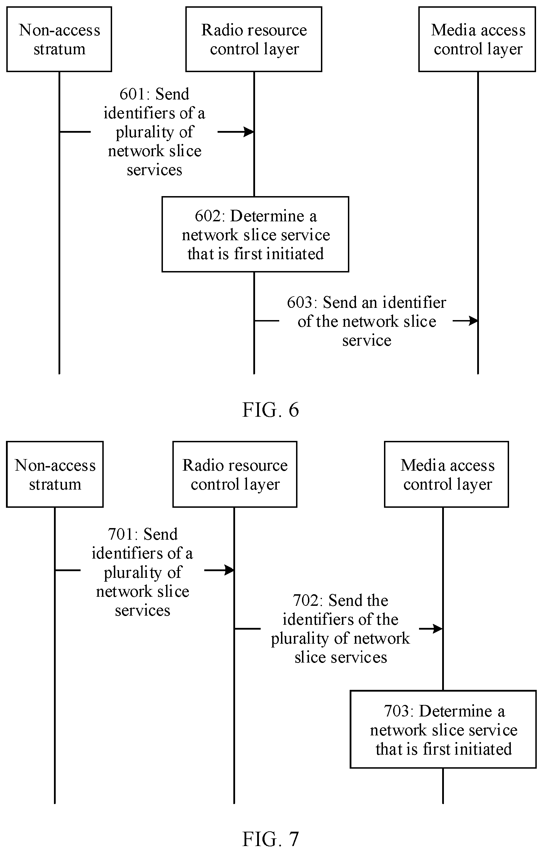

FIG. 6 is a schematic flowchart of a random access method 600 according to an embodiment of this application. The random access method 600 includes the following steps.

601: A NAS of a terminal device sends identifiers of a plurality of network slice services to an RRC layer.

When there are a plurality of to-be-initiated network slice services, the NAS may send the identifiers of all the to-be-initiated network slice services to the RRC layer, and the RRC layer determines a network slice service that is first initiated.

602: The RRC layer of the terminal device determines the network slice service that is first initiated.

After the RRC layer receives the identifiers of the plurality of network slice services, the RRC layer may determine, based on the identifiers of the plurality of network slice services, the network slice service that is first initiated. Specifically, manners in which the RRC layer determines the network slice service that is first initiated may include but are not limited to the following two manners.
(1) The RRC layer determines an initiation sequence of the network slice services based on priorities of the network slice services, and further determines the network slice service that is first initiated. For example, the RRC layer may sort the plurality of network slice services in descending order of the priorities of network slice services. To be specific, a higher priority of a network slice service indicates a higher initiation sequence of the network slice service, and a network slice service with a highest priority is the network slice service that is first initiated. An access network device may carry priority information of the network slice service in a system message, a PDCCH message, or an RRC message, and the terminal device may obtain the priority of the network slice service by reading the system message, the PDCCH message, or the RRC message.
(2) The RRC layer randomly selects, with a same probability from the plurality of network slice services, the network slice service that is first initiated.

603: The RRC layer of the terminal device sends the identifier of the network slice service to a MAC layer.

After the RRC layer determines the network slice service that is first initiated, the RRC layer may send the identifier of the first initiated network slice service to the MAC layer, to enable the MAC layer to determine a random access time-frequency resource of the network slice service and initiate random access.

The foregoing embodiment corresponding to FIG. 6 describes a process in which the RRC layer determines the network slice service that is first initiated. The following describes a process in which a MAC layer determines a network slice service that is first initiated.

FIG. 7 is a schematic flowchart of a random access method 700 according to an embodiment of this application. The random access method 700 includes the following steps.

701: A NAS of a terminal device sends identifiers of a plurality of network slice services to an RRC layer.

When there are a plurality of to-be-initiated network slice services, the NAS may send the identifiers of all the to-be-initiated network slice services to the RRC layer, and the RRC layer determines a network slice service that is first initiated.

702: The RRC layer of the terminal device sends the identifiers of the plurality of network slice services to a MAC layer.

In this embodiment, the MAC layer is an entity for deciding a network slice service to be first initiated. Therefore, the RRC layer may send the received identifiers of the plurality of network slice services to the MAC layer, and the MAC layer determines the network slice service that is first initiated.

703: The MAC layer of the terminal device determines the network slice service that is first initiated.

After the MAC layer receives the identifiers of the plurality of network slice services that are sent by the RRC layer, the MAC layer may determine, based on the identifiers of the plurality of network slice services, the network slice service that is first initiated. Specifically, manners in which the MAC layer determines the network slice service that is first initiated may include but are not limited to the following four manners.
(1) The MAC layer first determines a random access time-frequency resource that locates after a first time point and is closest to the first time point, and then determines a network slice service corresponding to the random access time-frequency resource as a network slice service that is first initiated. The first time point is a time point at which the MAC layer receives instructions for initiating random access. To be specific, the first time point may be specifically a time point at which the MAC layer receives the identifiers that are of the plurality of network slice services and that are sent by the RRC layer and receives the instructions for indicating the MAC layer to initiate random access. Simply speaking, after receiving the instructions for initiating random access, the MAC layer determines a random access time-frequency resource that can be used for first initiating random access, and then determines a network slice service corresponding to the random access time-frequency resource, to determine the network slice service that is first initiated.
(2) The MAC layer determines a network slice service that has most random access time-frequency resources per unit of time as the network slice service that is first initiated. Specifically, a quantity of random access time-frequency resources corresponding to each network slice service per unit of time may be determined, and the network slice that has most random access time-frequency resources is selected as the network slice service that is first initiated. For example, it is assumed that the to-be-initiated network slice services include a network slice service 1 and a network slice service 2. In a 10 ms radio frame, the network slice service 1 has n random access time-frequency resources, and the network slice service 2 has m random access time-frequency resources. If n>m, the network slice service 1 is selected as the network slice service that is first initiated.
(3) The MAC layer determines a network slice service that has most random access time-frequency resources in a preset time period as the network slice service that is first initiated. Duration of the preset time period may be set based on an actual situation. For example, the duration of the preset time period may be 10 ms, 20 ms, or 50 ms. This is not specifically limited herein.
(4) The MAC layer randomly selects, with a same probability from the plurality of network slice services, the network slice service that is first initiated.

The foregoing describes a process in which the terminal device initiates random access based on the plurality of network slice services. The following describes in detail a process for how the terminal device initiates a network slice service and a default slice service when the terminal device has the to-be-initiated network slice service and the default slice service. A network slice is usually a logical network configured with a specific network function, and a network slice service is a service performed in the network slice. When the terminal device carries an identifier of a network slice when initiating a service, it may be considered that the terminal device initiates the network slice service, and the network slice service initiated by the terminal device is performed in the network slice corresponding to the identifier of the network slice. When the terminal device does not carry an identifier of a network slice when initiating a service, it may be considered that the terminal device initiates the default network slice service, and the default slice service initiated by the terminal device may be performed in a default slice allocated to the terminal device by a core network device.

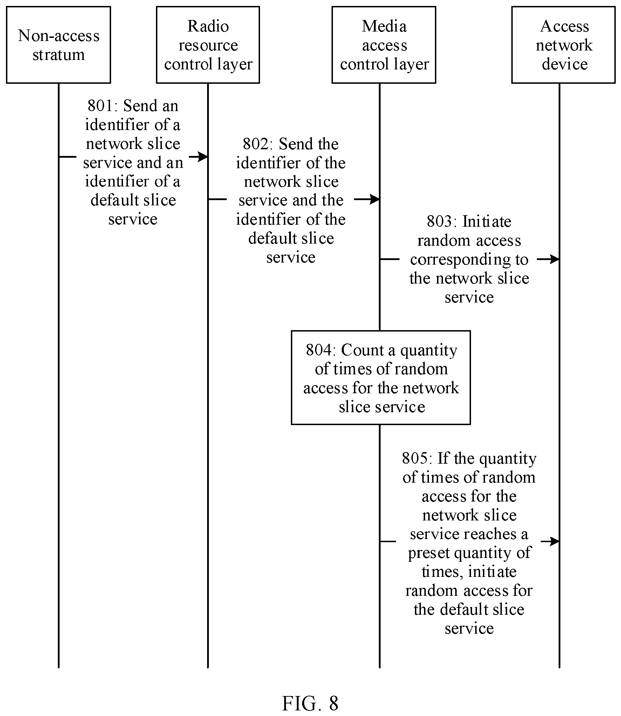

FIG. 8 is a schematic flowchart of a random access method 800 according to an embodiment of this application. The random access method 800 includes the following steps.

801: A NAS of a terminal device sends an identifier of a network slice service and an identifier of a default slice service to an RRC layer.

When to-be-initiated services include both the network slice service and the default slice service, the NAS sends the identifier of the to-be-initiated network slice service and the identifier of the default slice service to the RRC layer.

802: The RRC layer of the terminal device sends the identifier of the network slice service and the identifier of the default slice service to a MAC layer.

In this embodiment, the MAC layer determines a service to be initiated. Therefore, the RRC layer sends the identifier of the network slice service and the identifier of the default slice service to the MAC layer. It may be understood that the RRC layer may alternatively determine the service to be initiated. In this case, the RRC layer only needs to send an identifier of the service that needs to be initiated to the MAC layer. This is not specifically limited in this embodiment.

803: The MAC layer of the terminal device initiates random access corresponding to the network slice service.

After the MAC layer receives the identifier of the network slice service and the identifier of the default slice service, the MAC layer may determine a network slice service to be preferably initiated. In other words, the MAC layer selects one network slice service from one or more network slice services and initiates the network slice service.

804: The MAC layer of the terminal device counts a quantity of times of random access for the network slice service.

After the MAC layer initiates random access for the network slice service, the MAC layer may count the quantity of times of random access for the network slice service. Specifically, a counter may be configured on the MAC layer. Every time the MAC layer initiates random access for the network slice service, a value of the counter is increased by 1, so that the quantity of times of random access for the network slice service is counted.

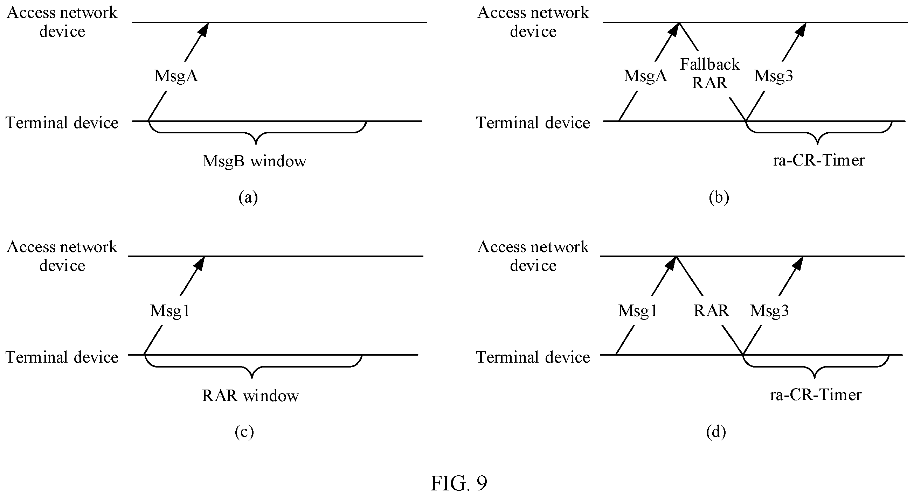

In a possible implementation, there may be a plurality of cases in which the value of the counter is triggered to increase by 1. FIG. 9 is a schematic diagram of actions of triggering a counter according to an embodiment of this application. As shown in FIG. 9, actions of triggering a counter specifically include but are not limited to the following four cases.

As shown in (a) in FIG. 9, a terminal device initiates two-step random access. When the terminal device sends a MSGA corresponding to a network slice service to an access network device, and the terminal device does not receive a response (namely, a MSGB) from the access network device in a window period (MSGB window) corresponding to the MSGA, a value of a counter is increased by 1, and the terminal device needs to resend the MSGA of the network slice service.

As shown in (b) in FIG. 9, a terminal device initiates two-step random access. When the terminal device sends a MSGA corresponding to a network slice service to an access network device, and receives a fallback random access response (fallback random access response, fallback RAR) sent by the access network device, the terminal device continues to send a MSG3 to the access network device. When the terminal device does not receive a response (namely, a MSG4) from the access network device within a time period set by a random access contention resolution timer (random access contention resolution timer, ra-CR Timer), a value of a counter is increased by 1. In addition, the terminal device needs to resend the MSGA of the network slice service. The fallback RAR indicates the terminal device to separately resend the MSG3.

As shown in (c) in FIG. 9, a terminal device initiates four-step random access. When the terminal device sends a MSG1 corresponding to a network slice service to an access network device, and the terminal device does not receive a response (namely, a MSG2) from the access network device in a random access response window (random access response window, RAR window), a value of a counter is increased by 1, and the terminal device needs to resend the preamble of the network slice service. The RAR window is a time window used for listening to a resource delivered by the access network device. The terminal device may send a MSG3 to the access network device based on the resource delivered by the access network device.

As shown in (d) in FIG. 9, a terminal device initiates four-step random access. After the terminal device sends a MSG1 corresponding to a network slice service to an access network device, and the terminal device receives a RAR, the terminal device continues to send a MSG3 to the access network device. If the terminal device does not receive a response (namely, a MSG4) from the access network device within a time period set by an ra-CR Timer, a value of a counter is increased by 1, and the terminal device needs to resend the preamble of the network slice service.

805: If the quantity of times of random access for the network slice service reaches a preset quantity of times, random access for the default slice service is initiated.

If the quantity of times for initiating random access for the network slice service reaches the preset quantity of times, for example, 5, random access for the network slice service is stopped, and random access for the default slice service is initiated.

It may be understood that the quantity of times of random access for the network slice service includes a quantity of times of failing to initiate random access for the network slice service. For example, the preset quantity of times is 5. When random access corresponding to the network slice service continuously fails to be initiated for 5 times, it may be considered that the quantity of times of random access for the network slice service reaches the preset quantity of times. In this way, by counting the quantity of times of random access corresponding to the network slice service, when random access for the network slice service is preferably initiated, a possibility of initiating random access for the default slice service may be ensured.

The preset quantity of times may be set or adjusted by the access network device based on an actual situation. For example, the preset quantity of times may be set to 3 or 5. A specific value of the preset quantity of times is not limited in this embodiment.

It should be noted that before the terminal device initiates random access for the network slice service or random access for the default slice service, the terminal device may obtain a random access configuration corresponding to the network slice service and a random access configuration corresponding to the default slice service. The terminal device may obtain, by receiving a system message, an RRC message, or a PDCCH message sent by the access network device, the random access configuration corresponding to the network slice service and the random access configuration corresponding to the default slice service. Specifically, the random access configuration corresponding to the network slice service and the random access configuration corresponding to the default slice service may include but are not limited to the following.

A maximum quantity of power ramping times (power_ramping max time) and a power ramping step (power_ramping maxstep) may be included. Specifically, after the terminal device detects no response from the access network device in the RAR window, the terminal device increases power for sending the preamble. A maximum quantity of times of power increase of the terminal device is the maximum quantity of power ramping times, and an amplitude of each power increase of the terminal device is the power ramping step. Optionally, during configuration, a larger maximum quantity of power ramping times (namely, more times) and a larger power ramping step (namely, a larger step) may be configured for the network slice service, and a smaller maximum quantity of power ramping times (namely, fewer times) and a smaller power ramping step (namely, a smaller step) may be configured for the default slice service.

A fallback scaling factor (scaling_factor_BI) may be included. The fallback scaling factor refers to a scaling factor in an event when a fallback occurs. A value range of the fallback scaling factor is 0 to 1. Optionally, during configuration, a fallback scaling factor with a smaller value may be configured for the network slice service, and a fallback scaling factor with a larger value may be configured for the default slice service.

Duration of a RAR window may be included. Optionally, during configuration, duration of a RAR window corresponding to the network slice service may be different from duration of a RAR window corresponding to the default slice service. Duration of a MSGB window may be included. Optionally, during configuration, duration of a MSGB window corresponding to the network slice service may be different from duration of a MSGB window corresponding to the default slice service.

Duration of an Ra-CR Timer may be included. Optionally, during configuration, duration of an Ra-CR Timer corresponding to the network slice service may be different from duration of an Ra-CR Timer corresponding to the default slice service.

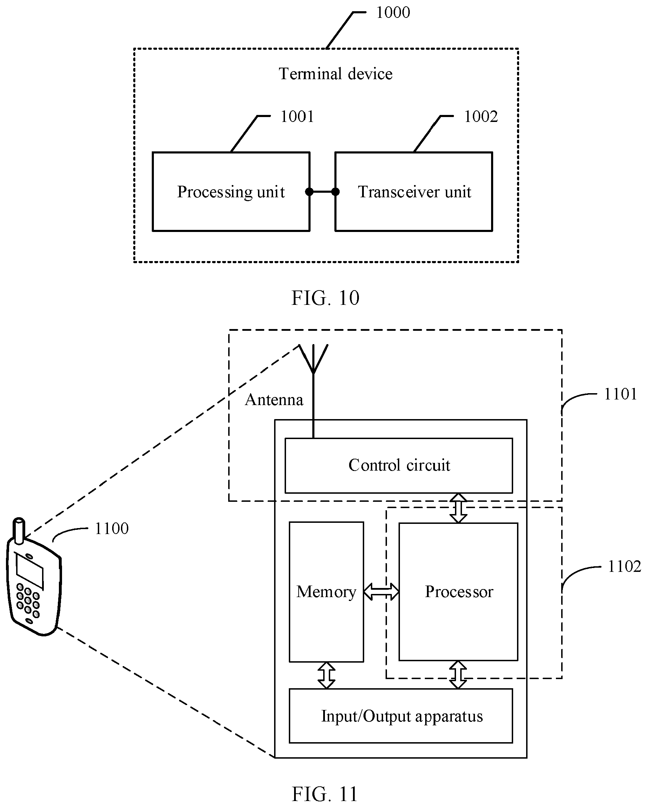

FIG. 10 is a schematic diagram of a structure of a terminal device 1000 according to an embodiment of this application. As shown in FIG. 10, the terminal device 1000 includes a processing unit 1001 and a transceiver unit 1002. The processing unit 1001 is configured to determine a first random access time-frequency resource corresponding to a first network slice service, where the first network slice service is a to-be-initiated network slice service. The processing unit 1001 is further configured to determine a random access type corresponding to the first network slice service. The transceiver unit 1002 is configured to initiate random access based on the first random access time-frequency resource and the random access type.

In a possible implementation, the processing unit 1001 is further configured to determine, based on an identifier of the first network slice service and a first mapping relationship, the first random access time-frequency resource corresponding to the first network slice service, where the first mapping relationship is a mapping relationship between a network slice service identifier and a random access time-frequency resource.

In a possible implementation, the transceiver unit 1002 is further configured to receive a first message, where the first message includes the first mapping relationship.

In a possible implementation, the first message includes a physical random access channel mask index, and the physical random access channel mask index indicates the first mapping relationship.

In a possible implementation, the processing unit 1001 is further configured to: obtain signal quality of a reference signal; and when the signal quality is greater than or equal to a preset threshold, and the first network slice service corresponds to two-step random access in a second mapping relationship, determine that the random access type corresponding to the first network slice service is the two-step random access; or when the signal quality is less than a preset threshold, or the first network slice service corresponds to four-step random access in a second mapping relationship, determine that the random access type corresponding to the first network slice service is the four-step random access. The second mapping relationship is a mapping relationship between a network slice service and a random access type.

In a possible implementation, the transceiver unit 1002 is further configured to receive a second message, where the second message includes the second mapping relationship.

In a possible implementation, the processing unit 1001 is further configured to: if the terminal device has a plurality of to-be-initiated network slice services, determine, from the plurality of to-be-initiated network slice services based on priorities of the network slice services, to initiate the first network slice service, where the first network slice service is a network slice service with a highest priority in the plurality of to-be-initiated network slice services.

In a possible implementation, the processing unit 1001 is further configured to: if the terminal device has a plurality of to-be-initiated network slice services, determine that a first network slice service corresponding to a third random access time-frequency resource is a network slice service to be initiated, where the third random access time-frequency resource is a random access time-frequency resource that locates after a first time point and is closest to the first time point, and the first time point is a time point at which a MAC entity of the terminal device obtains instructions for initiating random access.

In a possible implementation, the processing unit 1001 is further configured to: if the terminal device has a plurality of to-be-initiated network slice services, determine, based on quantities of corresponding random access time-frequency resources of the network slice services in a preset time period, to initiate the first network slice service, where the first network slice service is a network slice service that has a largest quantity of corresponding random access time-frequency resources in the preset time period in the plurality of to-be-initiated network slice services.

In a possible implementation, the transceiver unit 1002 is further configured to receive a third message, where the third message includes first configuration information and second configuration information, the first configuration information indicates a random access configuration corresponding to a network slice service, and the second configuration information indicates a random access configuration corresponding to a default slice service.

In a possible implementation, the processing unit 1001 is further configured to: if both a to-be-initiated network slice service and a default slice service exist, count a quantity of times of random access for the network slice service; and the transceiver unit 1002 is further configured to: if the quantity of times of random access for the network slice service reaches a preset quantity of times, stop random access for the network slice service, and initiate random access for the default slice service.

In a possible implementation, the processing unit 1001 is further configured to: if the first random access time-frequency resource includes random access time-frequency resources of different random access types, determine a second random access time-frequency resource from the first random access time-frequency resource based on the random access type, where the second random access time-frequency resource is a random access time-frequency resource corresponding to the random access type; and the transceiver unit 1002 is further configured to initiate random access based on the second random access time-frequency resource and the random access type corresponding to the first network slice service.

FIG. 11 is a schematic diagram of a structure of a terminal device 1100 according to an embodiment of this application. The terminal device 1100 is applicable to the system shown in FIG. 1, and may perform functions of the terminal device in the foregoing method embodiments. For ease of description, FIG. 11 shows only main components of the terminal device. As shown in FIG. 11, the terminal device 1100 includes a processor, a memory, a control circuit, an antenna, and an input/output apparatus. The processor is mainly configured to: process a communication protocol and communication data, control the entire terminal device, execute a software program, and process data of the software program. For example, the processor is configured to support the terminal device in performing actions described in the foregoing method embodiments, for example, receiving a usage threshold of a wake-up signal, and determining, based on the usage threshold and an eDRX cycle, whether to listen to the wake-up signal. The memory is mainly configured to store the software program and the data, for example, store the usage threshold of the wake-up signal, and the like described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 11 shows only one memory and one processor. In an actual terminal device, there may be a plurality of processors and a plurality of memories. The memory may also be referred to as a storage medium, a storage device, or the like. This is not limited in this embodiment of this application.

In an optional implementation, the processor may include a baseband processor and/or a central processing unit. The baseband processor is mainly configured to process a communication protocol and communication data. The central processing unit is mainly configured to control the entire terminal device, execute a software program, and process data of the software program. Functions of the baseband processor and the central processing unit may be integrated into the processor in FIG. 11. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In this embodiment of this application, the antenna and the control circuit that have receiving and sending functions may be considered as a transceiver 1101 of the terminal device 1100. For example, the antenna and the control circuit may be configured to support the terminal device in performing the foregoing receiving function and sending function. A processor having a processing function is considered as a processor 1102 of the terminal device 1100. As shown in FIG. 11, the terminal device 1100 includes the transceiver 1101 and the processor 1102. The transceiver may also be referred to as a transceiver, a transceiver apparatus, or the like. Optionally, a component that is in the transceiver 1101 and that is configured to implement a receiving function may be considered as a receiving unit, and a component that is in the transceiver 1101 and that is configured to implement a sending function may be considered as a sending unit. To be specific, the transceiver 1101 includes a receiving unit and a sending unit. The receiving unit may also be referred to as a receiver, an input port, a receiving circuit, or the like. The sending unit may be referred to as a transmitter, a transmitter machine, a transmitter circuit, or the like.

The processor 1102 may be configured to execute instructions stored in the memory, to control the transceiver 1101 to receive a signal and/or send a signal, to complete functions of the terminal device in the foregoing method embodiments. In an implementation, it may be considered that the functions of the transceiver 1101 may be implemented by using a transceiver circuit or a dedicated transceiver chip.

It should be understood that "one embodiment" or "an embodiment" mentioned in the entire specification means that particular features, structures, or characteristics related to embodiments are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In several embodiments provided in this application, it should be understood that the disclosed system, apparatuses, and methods may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

## Claims

1. A random access method, comprising:
sending (501), by a non-access stratum, NAS, of a terminal device a RAN slicing area Identity, RSA ID, of a first network slice service to an access stratum, AS, of the terminal device, wherein the first network slice service is a to-be-initiated network slice service, wherein the RSA ID is a network slice identifier of a RAN area and
indicates one or more network slices, and wherein the RSA ID corresponds to one or more pieces of single network slice selection assistance information, S-NSSAI;
determining (201), by the AS of the terminal device, one or more first random access time-frequency resources corresponding to the first network slice service based on the RSA ID and a first mapping relationship, wherein the first mapping relationship is a mapping relationship between a network slice service and a random access time-frequency resource;
determining, by the terminal device, a random access type corresponding to the first network slice service; and initiating (203), by the terminal device, random access based on the one or more first random access time-frequency resources and the random access type.

2. The random access method according to claim 1, wherein the one or more first random access time-frequency resources comprise a random access time-frequency resources corresponding to two-step random access and a random access time-frequency resources corresponding to four-step random access; or
the one or more first random access time-frequency resources comprise only a random access time-frequency resources corresponding to two-step random access; or
the one or more first random access time-frequency resources comprise only a random access time-frequency resources corresponding to four-step random access.

3. The random access method according to claim 2, wherein the one or more first random access time-frequency resources comprise a random access time-frequency resources corresponding to two-step random access and a random access time-frequency resources corresponding to four-step random access,
wherein the determining, by the terminal device, a random access type corresponding to the first network slice service comprises:
obtaining, by the terminal device, signal quality of a reference signal; and
when the signal quality is greater than or equal to a preset threshold, determining, by the terminal device, that the random access type corresponding to the first network slice service is the two-step random access; or
when the signal quality is less than a preset threshold, determining, by the terminal device, that the random access type corresponding to the first network slice service is the four-step random access.

4. The random access method according to claim 2,
wherein the one or more first random access time-frequency resources comprise only a random access time-frequency resources corresponding to two-step random access, wherein the determining, by the terminal device, a random access type corresponding to the first network slice service comprises: determining, by the terminal device, that the random access type corresponding to the first network slice service is the two-step random access; or
wherein the one or more first random access time-frequency resources comprise only a random access time-frequency resources corresponding to four-step random access, wherein the determining, by the terminal device, a random access type corresponding to the first network slice service comprises: determining, by the terminal device, that the random access type corresponding to the first network slice service is the four-step random access.

5. The random access method according to claim 2 or 3, wherein the one or more first random access time-frequency resources comprise a random access time-frequency resources corresponding to two-step random access and a random access time-frequency resources corresponding to four-step random access,
wherein the initiating (203), by the terminal device, random access based on the one or more first random access time-frequency resources and the random access type comprises:
determining, by the terminal device, that one or more second random access time-frequency resources are a random access time-frequency resource corresponding to the determined random access type in the one or more first random access time-frequency resources,
initiating, by the terminal device, random access based on the one or more second random access time-frequency resources.

6. The random access method according to claim 5, wherein the one or more second random access time-frequency resources comprise only one random access time-frequency resource, wherein the initiating (203), by the terminal device, random access based on the one or more second random access time-frequency resources comprises: initiating, by the terminal device, random access by using the one or more second random access time-frequency resources, or
wherein the one or more second random access time-frequency resources comprise a plurality of random access time-frequency resources, wherein the initiating (203), by the terminal device, random access based on the one or more second random access time-frequency resources comprises: selecting randomly, by the terminal device, one random access time-frequency resource from the one or more second random access time-frequency resources, and initiating, by the terminal device, random access based on the selected random access time-frequency resource.

7. The random access method according to any one of claims 1 to 6, wherein the method further comprises:
receiving, by the terminal device, a first message, wherein the first message comprises the first mapping relationship.

8. The random access method according to claim 7, wherein the first message comprises a physical random access channel mask index, and the physical random access channel mask index indicates the first mapping relationship.

9. The random access method according to claim 7 or 8, wherein the first message is a radio resource control, radio resource control, RRC, message, a physical downlink control channel, physical downlink control channel, PDCCH, message, or a system message.

10. The random access method according to any one of claims 1 to 9, wherein the method further comprises:
if the terminal device has a plurality of to-be-initiated network slice services, determining, by the terminal device from the plurality of to-be-initiated network slice services based on priorities of the network slice services, to initiate the first network slice service, wherein the first network slice service is a network slice service with a highest priority in the plurality of to-be-initiated network slice services.

11. The random access method according to any one of claims 1 to 9, wherein the method further comprises:
if the terminal device has a plurality of to-be-initiated network slice services, determining, by the terminal device, that a first network slice service corresponding to a third random access time-frequency resource is a network slice service to be initiated, wherein the third random access time-frequency resource is a random access time-frequency resource that locates after a first time point and is closest to the first time point, and the first time point is a time point at which a media access control, MAC, entity of the terminal device obtains instructions for initiating random access.

12. The random access method according to any one of claims 1 to 9, wherein the method further comprises:
if the terminal device has a plurality of to-be-initiated network slice services, determining, by the terminal device based on quantities of corresponding random access time-frequency resources of the network slice services in a preset time period, to initiate the first network slice service, wherein the first network slice service is a network slice service that has a largest quantity of corresponding random access time-frequency resources in the preset time period in the plurality of to-be-initiated network slice services.

13. The random access method according to any one of claims 1 to 12, wherein the method further comprises:
receiving, by the terminal device, a third message, wherein the third message comprises first configuration information and second configuration information, the first configuration information indicates a random access configuration corresponding to a network slice service, and the second configuration information indicates a random access configuration corresponding to a default slice service.

14. A terminal apparatus, comprising components configured to perform the method according to any one of claims 1 to 13.

15. A computer-readable storage medium comprising instructions which, when executed by a computer, cause the computer to carry out the method according to any one of claims 1 to 13.

## Patentansprüche

1. Direktzugriffsverfahren, umfassend:
Senden (501) einer RAN-Slicing-Bereichsidentität, RSA-ID, eines ersten Netzwerk-Slice-Dienstes durch ein Non-Access-Stratum, NAS, einer Endgerätevorrichtung an ein Access-Stratum, AS, der Endgerätevorrichtung, wobei der erste Netzwerk-Slice-Dienst ein zu initiierender Netzwerk-Slice-Dienst ist, wobei die RSA-ID eine Netzwerk-Slice-Kennung eines RAN-Bereichs ist und ein oder mehrere Netzwerk-Slices angibt, und wobei die RSA-ID einer oder mehreren Informationen zur Unterstützung der Auswahl einzelner Netzwerk-Slices, S-NSSAI, entspricht;
Bestimmen (201) einer oder mehrerer erster Zeit-Frequenz-Ressourcen mit Direktzugriff entsprechend dem ersten Netzwerk-Slice-Dienst durch das AS der Endgerätevorrichtung basierend auf der RSA-ID und einer ersten Zuordnungsbeziehung, wobei die erste Zuordnungsbeziehung eine Zuordnungsbeziehung zwischen einem Netzwerk-Slice-Dienst und einer Zeit-Frequenz-Ressource mit Direktzugriff ist;
Bestimmen eines Direktzugriffstyps entsprechend dem ersten Netzwerk-Slice-Dienst durch die Endgerätevorrichtung; und
Initiieren (203) eines Direktzugriffs durch die Endgerätevorrichtung basierend auf der einen oder den mehreren ersten Zeit-Frequenz-Ressourcen mit Direktzugriff und dem Direktzugriffstyp.

2. Direktzugriffsverfahren nach Anspruch 1, wobei die eine oder die mehreren ersten Zeit-Frequenz-Ressourcen mit Direktzugriff eine Zeit-Frequenz-Ressource mit Direktzugriff entsprechend einem zweistufigen Direktzugriff und eine Zeit-Frequenz-Ressource mit Direktzugriff entsprechend einem vierstufigen Direktzugriff umfassen; oder
die eine oder die mehreren ersten Zeit-Frequenz-Ressourcen mit Direktzugriff nur Zeit-Frequenz-Ressourcen mit Direktzugriff entsprechend einem zweistufigen Direktzugriff umfassen; oder die eine oder die mehreren ersten Zeit-Frequenz-Ressourcen mit Direktzugriff nur Zeit-Frequenz-Ressourcen mit Direktzugriff entsprechend einem vierstufigen Direktzugriff umfassen.

3. Direktzugriffsverfahren nach Anspruch 2, wobei die eine oder die mehreren ersten Zeit-Frequenz-Ressourcen mit Direktzugriff eine Zeit-Frequenz-Ressource mit Direktzugriff entsprechend einem zweistufigen Direktzugriff und eine Zeit-Frequenz-Ressource mit Direktzugriff entsprechend einem vierstufigen Direktzugriff umfassen,
wobei das Bestimmen eines Direktzugriffstyps entsprechend dem ersten Netzwerk-Slice-Dienst durch die Endgerätevorrichtung Folgendes umfasst:
Erlangen einer Signalqualität eines Referenzsignals durch die Endgerätevorrichtung; und
wenn die Signalqualität größer oder gleich einem voreingestellten Schwellenwert ist, Bestimmen durch die Endgerätevorrichtung, dass der Direktzugriffstyp entsprechend dem ersten Netzwerk-Slice-Dienst der zweistufige Direktzugriff ist; oder
wenn die Signalqualität kleiner einem voreingestellten Schwellenwert ist, Bestimmen durch die Endgerätevorrichtung, dass der Direktzugriffstyp entsprechend dem ersten Netzwerk-Slice-Dienst der vierstufige Direktzugriff ist.

4. Direktzugriffsverfahren nach Anspruch 2,
wobei die eine oder die mehreren ersten Zeit-Frequenz-Ressourcen mit Direktzugriff nur eine Zeit-Frequenz-Ressource mit Direktzugriff entsprechend einem zweistufigen Direktzugriff umfassen, wobei das Bestimmen eines Direktzugriffstyps entsprechend dem ersten Netzwerk-Slice-Dienst durch die Endgerätevorrichtung Folgendes umfasst: Bestimmen durch die Endgerätevorrichtung, dass der Direktzugriffstyp entsprechend dem ersten Netzwerk-Slice-Dienst der zweistufige Direktzugriff ist; oder
wobei die eine oder die mehreren ersten Zeit-Frequenz-Ressourcen mit Direktzugriff nur eine Zeit-Frequenz-Ressource mit Direktzugriff entsprechend einem vierstufigen Direktzugriff umfassen, wobei das Bestimmen eines Direktzugriffstyps entsprechend dem ersten Netzwerk-Slice-Dienst durch die Endgerätevorrichtung Folgendes umfasst: Bestimmen durch die Endgerätevorrichtung, dass der Direktzugriffstyp entsprechend dem ersten Netzwerk-Slice-Dienst der vierstufige Direktzugriff ist.

5. Direktzugriffsverfahren nach Anspruch 2 oder 3, wobei die eine oder die mehreren ersten Zeit-Frequenz-Ressourcen mit Direktzugriff eine Zeit-Frequenz-Ressource mit Direktzugriff entsprechend einem zweistufigen Direktzugriff und eine Zeit-Frequenz-Ressource mit Direktzugriff entsprechend einem vierstufigen Direktzugriff umfassen,
wobei das Initiieren (203) eines Direktzugriffs durch die Endgerätevorrichtung basierend auf der einen oder den mehreren ersten Zeit-Frequenz-Ressourcen mit Direktzugriff und dem Direktzugriffstyp Folgendes umfasst:
Bestimmen durch die Endgerätevorrichtung, dass eine oder mehrere zweite Zeit-Frequenz-Ressourcen mit Direktzugriff eine Zeit-Frequenz-Ressource mit Direktzugriff entsprechend dem bestimmten Direktzugriffstyp in der einen oder den mehreren ersten Zeit-Frequenz-Ressourcen mit Direktzugriff sind;
Initiieren eines Direktzugriffs durch die Endgerätevorrichtung basierend auf der einen oder den mehreren zweiten Zeit-Frequenz-Ressourcen mit Direktzugriff.

6. Direktzugriffsverfahren nach Anspruch 5, wobei die eine oder die mehreren zweiten Zeit-Frequenz-Ressourcen mit Direktzugriff nur eine Zeit-Frequenz-Ressource mit Direktzugriff umfassen, wobei das Initiieren (203) des Direktzugriffs durch die Endgerätevorrichtung basierend auf der einen oder den mehreren zweiten Zeit-Frequenz-Ressourcen mit Direktzugriff Folgendes umfasst: Initiieren des Direktzugriffs durch die Endgerätevorrichtung unter Verwendung der einen oder der mehreren zweiten Zeit-Frequenz-Ressourcen mit Direktzugriff; oder
wobei die eine oder die mehreren zweiten Zeit-Frequenz-Ressourcen mit Direktzugriff eine Vielzahl von Zeit-Frequenz-Ressourcen mit Direktzugriff umfassen, wobei das Initiieren (203) eines Direktzugriffs durch die Endgerätevorrichtung basierend auf der einen oder den mehreren zweiten Zeit-Frequenz-Ressourcen mit Direktzugriff Folgendes umfasst: direktes Auswählen einer Zeit-Frequenz-Ressource mit Direktzugriff durch die Endgerätevorrichtung aus der einen oder den mehreren zweiten Zeit-Frequenz-Ressourcen mit Direktzugriff; und Initiieren des Direktzugriffs durch die Endgerätevorrichtung basierend auf der ausgewählten Zeit-Frequenz-Ressource mit Direktzugriff.

7. Direktzugriffsverfahren nach einem der Ansprüche 1 bis 6, wobei das Verfahren ferner Folgendes umfasst:
Empfangen einer ersten Nachricht durch die Endgerätevorrichtung, wobei die erste Nachricht die erste Zuordnungsbeziehung umfasst.

8. Direktzugriffsverfahren nach Anspruch 7, wobei die erste Nachricht einen Maskenindex für physische Direktzugriffskanäle umfasst und der Maskenindex für physische Direktzugriffskanäle die erste Abbildungsbeziehung angibt.

9. Direktzugriffsverfahren nach Anspruch 7 oder 8, wobei die erste Nachricht eine Nachricht für Funkressourcensteuerung, RRC-Nachricht, eine Nachricht des physischen Downlink-Steuerkanals, PDCCH-Nachricht, oder eine Systemnachricht ist.

10. Direktzugriffsverfahren nach einem der Ansprüche 1 bis 9, wobei das Verfahren ferner Folgendes umfasst:
sofern die Endgerätevorrichtung eine Vielzahl von zu initiierenden Netzwerk-Slice-Diensten aufweist, Bestimmen durch die Endgerätevorrichtung aus der Vielzahl von zu initiierenden Netzwerk-Slice-Diensten basierend auf den Prioritäten der Netzwerk-Slice-Dienste, den ersten Netzwerk-Slice-Dienst zu initiieren, wobei der erste Netzwerk-Slice-Dienst ein Netzwerk-Slice-Dienst mit einer höchsten Priorität in der Vielzahl von zu initiierenden Netzwerk-Slice-Diensten ist.

11. Direktzugriffsverfahren nach einem der Ansprüche 1 bis 9, wobei das Verfahren ferner Folgendes umfasst:
sofern die Endgerätevorrichtung eine Vielzahl von zu initiierenden Netzwerk-Slice-Diensten aufweist, Bestimmen durch die Endgerätevorrichtung, dass ein erster Netzwerk-Slice-Dienst entsprechend einer dritten Zeit-Frequenz-Ressource mit Direktzugriff ein zu initiierender Netzwerk-Slice-Dienst ist, wobei die dritte Zeit-Frequenz-Ressource mit Direktzugriff eine Zeit-Frequenz-Ressource mit Direktzugriff ist, die nach einem ersten Zeitpunkt liegt und dem ersten Zeitpunkt am nächsten ist, und der erste Zeitpunkt ein Zeitpunkt ist, zu welchem eine Einheit der Medienzugriffssteuerung, MAC-Einheit, der Endgerätevorrichtung Anweisungen zum Initiieren des Direktzugriffs erlangt.

12. Direktzugriffsverfahren nach einem der Ansprüche 1 bis 9, wobei das Verfahren ferner Folgendes umfasst:
sofern die Endgerätevorrichtung eine Vielzahl von zu initiierenden Netzwerk-Slice-Diensten aufweist, Bestimmen durch die Endgerätevorrichtung basierend auf Mengen entsprechender Zeit-Frequenz-Ressourcen mit Direktzugriff der Netzwerk-Slice-Dienste in einem voreingestellten Zeitraum, den ersten Netzwerk-Slice-Dienst zu initiieren, wobei der erste Netzwerk-Slice-Dienst ein Netzwerk-Slice-Dienst ist, der in der Vielzahl von zu initiierenden Netzwerk-Slice-Diensten eine größte Menge entsprechender Zeit-Frequenz-Ressourcen mit Direktzugriff in dem voreingestellten Zeitraum aufweist.

13. Direktzugriffsverfahren nach einem der Ansprüche 1 bis 12, wobei das Verfahren ferner Folgendes umfasst:
Empfangen einer dritten Nachricht durch die Endgerätevorrichtung, wobei die dritte Nachricht erste Konfigurationsinformationen und zweite Konfigurationsinformationen umfasst, die ersten Konfigurationsinformationen eine Direktzugriffskonfiguration entsprechend einem Netzwerk-Slice-Dienst angeben, und die zweiten Konfigurationsinformationen eine Direktzugriffskonfiguration entsprechend einem Standard-Slice-Dienst angeben.

14. Endgerätevorrichtung, umfassend Komponenten, die dazu konfiguriert ist, das Verfahren nach einem der Ansprüche 1 bis 13 durchzuführen.

15. Computerlesbares Speichermedium, umfassend Anweisungen, die bei Ausführung durch einen Computer den Computer dazu veranlassen, das Verfahren nach einem der Ansprüche 1 bis 13 durchzuführen.

## Revendications

1. Procédé d'accès aléatoire, comprenant :
l'envoi (501), par une strate de non-accès, NAS, d'un dispositif terminal d'une identité de zone de découpage RAN, RSA ID, d'un premier service de tranche de réseau à une strate d'accès, AS, du dispositif terminal, dans lequel le premier service de tranche de réseau est un service de tranche de réseau à initier, dans lequel l'ID RSA est un identifiant de tranche de réseau d'une zone RAN et indique une ou plusieurs tranches de réseau, et dans lequel l'ID RSA correspond à un ou plusieurs éléments d'informations d'assistance à la sélection de tranche de réseau unique, S-NSSAI ;
la détermination (201), par l'AS du dispositif terminal, d'une ou de plusieurs premières ressources temps-fréquence d'accès aléatoire correspondant au premier service de tranche de réseau sur la base de l'ID RSA et d'une première relation de mappage, dans lequel la première relation de mappage est une relation de mappage entre un service de tranche de réseau et une ressource temps-fréquence d'accès aléatoire ;
la détermination, par le dispositif terminal, d'un type d'accès aléatoire correspondant au premier service de tranche de réseau ; et
l'initiation (203), par le dispositif terminal, d'un accès aléatoire sur la base des une ou plusieurs premières ressources temps-fréquence d'accès aléatoire et du type d'accès aléatoire.

2. Procédé d'accès aléatoire selon la revendication 1, dans lequel les une ou plusieurs premières ressources temps-fréquence d'accès aléatoire comprennent des ressources temps-fréquence d'accès aléatoire correspondant à un accès aléatoire en deux étapes et des ressources temps-fréquence d'accès aléatoire correspondant à un accès aléatoire en quatre étapes ; ou
les une ou plusieurs premières ressources temps-fréquence d'accès aléatoire comprennent uniquement des ressources temps-fréquence d'accès aléatoire correspondant à un accès aléatoire en deux étapes ; ou
les une ou plusieurs premières ressources temps-fréquence d'accès aléatoire comprennent uniquement des ressources temps-fréquence d'accès aléatoire correspondant à un accès aléatoire en quatre étapes.

3. Procédé d'accès aléatoire selon la revendication 2, dans lequel les une ou plusieurs premières ressources temps-fréquence d'accès aléatoire comprennent des ressources temps-fréquence d'accès aléatoire correspondant à un accès aléatoire en deux étapes et des ressources temps-fréquence d'accès aléatoire correspondant à un accès aléatoire en quatre étapes,
dans lequel la détermination, par le dispositif terminal, d'un type d'accès aléatoire correspondant au premier service de tranche de réseau comprend :
l'obtention, par le dispositif terminal, de la qualité de signal d'un signal de référence ; et
lorsque la qualité de signal est supérieure ou égale à un seuil prédéfini, la détermination, par le dispositif terminal, que le type d'accès aléatoire correspondant au premier service de tranche de réseau est l'accès aléatoire en deux étapes ; ou
lorsque la qualité de signal est inférieure à un seuil prédéfini, la détermination, par le dispositif terminal, que le type d'accès aléatoire correspondant au premier service de tranche de réseau est l'accès aléatoire en quatre étapes.

4. Procédé d'accès aléatoire selon la revendication 2,
dans lequel les une ou plusieurs premières ressources temps-fréquence d'accès aléatoire comprennent uniquement des ressources temps-fréquence d'accès aléatoire correspondant à un accès aléatoire en deux étapes, dans lequel la détermination, par le dispositif terminal, d'un type d'accès aléatoire correspondant au premier service de tranche de réseau comprend : la détermination, par le dispositif terminal, que le type d'accès aléatoire correspondant au premier service de tranche de réseau est l'accès aléatoire en deux étapes ; ou
dans lequel les une ou plusieurs premières ressources temps-fréquence d'accès aléatoire comprennent uniquement des ressources temps-fréquence d'accès aléatoire correspondant à un accès aléatoire en quatre étapes, dans lequel la détermination, par le dispositif terminal, d'un type d'accès aléatoire correspondant au premier service de tranche de réseau comprend : la détermination, par le dispositif terminal, que le type d'accès aléatoire correspondant au premier service de tranche de réseau est l'accès aléatoire en quatre étapes.

5. Procédé d'accès aléatoire selon la revendication 2 ou 3, dans lequel les une ou plusieurs premières ressources temps-fréquence d'accès aléatoire comprennent des ressources temps-fréquence d'accès aléatoire correspondant à un accès aléatoire en deux étapes et des ressources temps-fréquence d'accès aléatoire correspondant à un accès aléatoire en quatre étapes,
dans lequel l'initiation (203), par le dispositif terminal, d'un accès aléatoire sur la base des une ou plusieurs premières ressources temps-fréquence d'accès aléatoire et du type d'accès aléatoire comprend :
la détermination, par le dispositif terminal, qu'une ou plusieurs deuxièmes ressources temps-fréquence d'accès aléatoire sont une ressource temps-fréquence d'accès aléatoire correspondant au type d'accès aléatoire déterminé dans les une ou plusieurs premières ressources temps-fréquence d'accès aléatoire ;
l'initiation, par le dispositif terminal, d'un accès aléatoire sur la base des une ou plusieurs deuxièmes ressources temps-fréquence d'accès aléatoire.

6. Procédé d'accès aléatoire selon la revendication 5, dans lequel les une ou plusieurs deuxièmes ressources temps-fréquence d'accès aléatoire comprennent une seule ressource temps-fréquence d'accès aléatoire, dans lequel l'initiation (203), par le dispositif terminal, d'un accès aléatoire sur la base des une ou plusieurs deuxièmes ressources temps-fréquence d'accès aléatoire comprend : l'initiation, par le dispositif terminal, d'un accès aléatoire en utilisant les une ou plusieurs deuxièmes ressources temps-fréquence d'accès aléatoire ; ou
dans lequel les une ou plusieurs deuxièmes ressources temps-fréquence d'accès aléatoire comprennent une pluralité de ressources temps-fréquence d'accès aléatoire, dans lequel l'initiation (203), par le dispositif terminal, d'un accès aléatoire sur la base des une ou plusieurs deuxièmes ressources temps-fréquence d'accès aléatoire comprend : la sélection aléatoire, par le dispositif terminal, d'une ressource temps-fréquence d'accès aléatoire parmi les une ou plusieurs deuxièmes ressources temps-fréquence d'accès aléatoire ; et l'initiation, par le dispositif terminal, d'un accès aléatoire sur la base de la ressource temps-fréquence d'accès aléatoire sélectionnée.

7. Procédé d'accès aléatoire selon l'une quelconque des revendications 1 à 6, dans lequel le procédé comprend également :
la réception, par le dispositif terminal, d'un premier message, dans lequel le premier message comprend la première relation de mappage.

8. Procédé d'accès aléatoire selon la revendication 7, dans lequel le premier message comprend un index de masque de canal d'accès aléatoire physique, et l'index de masque de canal d'accès aléatoire physique indique la première relation de mappage.

9. Procédé d'accès aléatoire selon la revendication 7 ou 8, dans lequel le premier message est un message de commande de ressources radio, RRC, commande de ressources radio, un message de canal de commande de liaison descendante physique, PDCCH, canal de commande de liaison descendante physique, ou un message système.

10. Procédé d'accès aléatoire selon l'une quelconque des revendications 1 à 9, dans lequel le procédé comprend également :
si le dispositif terminal possède une pluralité de services de tranche de réseau à initier, la détermination, par le dispositif terminal à partir de la pluralité de services de tranche de réseau à initier sur la base des priorités des services de tranche de réseau, d'initier le premier service de tranche de réseau, dans lequel le premier service de tranche de réseau est un service de tranche de réseau avec une priorité la plus élevée dans la pluralité de services de tranche de réseau à initier.

11. Procédé d'accès aléatoire selon l'une quelconque des revendications 1 à 9, dans lequel le procédé comprend également :
si le dispositif terminal possède une pluralité de services de tranche de réseau à initier, la détermination, par le dispositif terminal, qu'un premier service de tranche de réseau correspondant à une troisième ressource temps-fréquence d'accès aléatoire est un service de tranche de réseau à initier, dans lequel la troisième ressource temps-fréquence d'accès aléatoire est une ressource temps-fréquence d'accès aléatoire qui se situe après un premier point temporel et est la plus proche du premier point temporel, et le premier point temporel est un point temporel au niveau duquel une entité de commande d'accès au support, MAC, du dispositif terminal obtient des instructions pour initier un accès aléatoire.

12. Procédé d'accès aléatoire selon l'une quelconque des revendications 1 à 9, dans lequel le procédé comprend également :
si le dispositif terminal possède une pluralité de services de tranche de réseau à initier, la détermination, par le dispositif terminal sur la base de quantités de ressources temps-fréquence d'accès aléatoire correspondantes des services de tranche de réseau dans une période de temps prédéfinie, d'initier le premier service de tranche de réseau, dans lequel le premier service de tranche de réseau est un service de tranche de réseau qui possède une plus grande quantité de ressources temps-fréquence d'accès aléatoire correspondantes dans la période de temps prédéfinie dans la pluralité de services de tranche de réseau à initier.

13. Procédé d'accès aléatoire selon l'une quelconque des revendications 1 à 12, dans lequel le procédé comprend également :
la réception, par le dispositif terminal, d'un troisième message, dans lequel le troisième message comprend de premières informations de configuration et de secondes informations de configuration, les premières informations de configuration indiquent une configuration d'accès aléatoire correspondant à un service de tranche de réseau, et les secondes informations de configuration indiquent une configuration d'accès aléatoire correspondant à un service de tranche par défaut.

14. Appareil terminal, comprenant des composants configurés pour réaliser le procédé selon l'une quelconque des revendications 1 et 13.

15. Support de stockage lisible par ordinateur comprenant des instructions qui, lorsqu'elles sont exécutées par un ordinateur, amènent l'ordinateur à mettre en œuvre le procédé selon l'une quelconque des revendications 1 à 13.
